Europäisches Patentamt

European Patent Office

Office européen des brevets

(19)

(11) Veröffentlichungsnummer: 0 333 966
A2

# (12) EUROPÄISCHE PATENTANMELDUNG

(21) Anmeldenummer: 88710034.5

(22) Anmeldetag: 03.10.88

(51) Int. Cl.⁴: **B23K 26/10 , B23K 26/00**

(30) Priorität: 03.10.87 DE 3733568

(43) Veröffentlichungstag der Anmeldung:
27.09.89 Patentblatt 89/39

(84) Benannte Vertragsstaaten:
AT BE CH DE ES FR GB GR IT LI LU NL SE

(71) Anmelder: **Thyssen Industrie AG**
**Am Thyssenhaus 1**
**D-4300 Essen 1(DE)**

(72) Erfinder: **Biehler, Hubert**
**Am Ruhrstein 37a**
**D-4300 Essen-Bredeney(DE)**
Erfinder: **Frings, Adam, Dipl.-Ing.**
**Kersthover Ring 88**
**D-4300 Essen(DE)**
Erfinder: **Prange, Wilfried, Dipl.-Ing.**
**Oleanderweg 20**
**D-4220 Dinslaken(DE)**

(74) Vertreter: **Eberhard, Friedrich, Dr.**
**Am Thyssenhaus 1**
**D-4300 Essen 1(DE)**

(54) **Verfahren zur Herstellung von Karosserien und Karosserieteilen von Kraftfahrzeugen und sonstigen Fahrzeugen.**

(57) Bei der Herstellung von Schweißverbindungen an Karosserieblechen von Kraftwagen und dergleichen Blechteilen mittels Laserstrahlen tritt das Problem auf, daß die Karosseriebleche zum Teil nicht formstabil sind und nach dem Verformen des Bleches in die Soll-Form zum Teil zurückfedern, wodurch zwischen den zu verbindenden Blechteilen zum Teil Spalte entstehen. Bei einer Einrichtung für das Laserschweißen mit einem Roboter mit Andruckzangen kann ein Vorteil des Laserschweißens, nämlich die hohe Geschwindigkeit, wegen des Festhaltens und Lösens der Zangen nicht ausgenutzt werden. Das Laserschweißen von Fahrzeugkarosserieteilen und dergleichen Blechteilen mit geringem zeitlichem und maschinellem Aufwand ist dadurch möglich, daß zumindest das nicht formstabile Blechteil (38) durch ein Meisterbett (38a) in seiner Soll-Form fixiert, mit dem anderen zu verschweißenden Blechteil (38b) in gegenseitige Soll-Position gebracht, die Blechteile (38,38b) an diskreten Punkten zu einem formstabilen Karosserieteil geheftet werden und dann die Blechteile (38,38b) mit einer Lasernahtschweißung fest und dicht miteinander verbunden werden, wobei das dem Laserkopf (12) zugewandte Blech (38b) durchgeschmolzen und das dem Laserkopf abgewandte Blech (38) zumindest angeschmolzen wird.

Fig. 1

## Verfahren zur Herstellung von Karosserien und Karosserieteilen und sonstigen Fahrzeugen

Die Erfindung betrifft ein Verfahren zur Herstellung von Karosserien und Karosserieteilen von Kraftfahrzeugen und sonstigen Fahrzeugen durch Verschweißen zum Teil nichtformstabiler Blechteile, bei dem die zu verbindenden Blechteile in ihrer Soll-Position einander teilweise überdeckend aufeinandergelegt werden, zumindest im Schweißbereich zum direkten Aufeinanderliegen gebracht und mit einem längs einer Oberfläche der Blechteile geführten Laserstrahl hoher Energie verschweißt werden.

Beim Laserschweißen von Karosserieteilen tritt folgende grundsätzliche Schwierigkeit auf. Das Laserschweißen stellt sehr hohe Anforderungen an die Herstell- und Positionierungsgenauigkeit der vorbereiteten, zu verschweißenden Bleche und an die Führungsgenauigkeit des Lasers, der die Verschweißung vornimmt. Karosserieteile können mit einer Genauigkeit von rd. ± 0,2 mm hergestellt werden. Bei der Anwendung des Laserschweißens sind zum Teil Genauigkeiten von ± 0,01 mm erforderlich. Schweißspalte sollen nicht mehr als 10 % der Materialdicke ausmachen, und bei der günstigsten Nahtform für das Laserschweißen, dem Stumpfstoß, sollen Schweißspalte von höchstens 0,15 mm vorliegen (VDI-Z, Bd. 129 (1987) Nr. 6, Seite 18,19).

Dieser Schwierigkeit beim Schweißen von Blechen entsprechend werden nach der europäischen Patentanmeldung, Veröffentlichungsnummer 189806, Bleche mit einer Welligkeit in Längsrichtung von höchstens 0,04 mm und im wesentlichen rechteckförmigen Schnittkanten in einer Vorrichtung präzise eingespannt und mit einer verfahrbaren Laserstrahleinrichtung mit einem Brennfleck von unter 0,2 mm stumpfgeschweißt (Seiten 6, Abs. 3 bis Seite 7 Abs. 2). Die Genauigkeitsanforderungen an die Steuerung des Laserkopfes für Schweißzwecke hat bei großen zu verschweißenden Objekten dazu geführt, daß der Laserstrahl mittels Portalsysteme geführt wird, die Robotern hinsichtlich der Führungsgenauigkeit erheblich überlegen sind (VDI-Z., Bd. 129 (1987) Seiten 37,38). Die Industrieroboter haben sich wegen der hohen Anforderungen der Laserbearbeitung an Nachführgenauigkeit (Wiederholgenauigkeit), Schwingungsarmut und Dynamik bisher nicht durchsetzen können (VDI-Z., Bd. 129 Seite 38, Abs. 3 Bild 4 zeigt das räumliche Schneiden eines kleinen Objekts). Ein Industrieroboter für das Schneiden oder Schweißen von Werkstücken, bei dem der Laserstrahl außerhalb erzeugt, über eine hohle, horizontale Schwenkachse in den Roboter eingeleitet und dort über ein inneres Spiegelsystem zum Roboterkopf (Laserkopf) geführt wird, ist bekannt aus der europäischen Patentanmeldung, Veröffentlichungsnummer 178011. Ein solcher Laser-Roboter ist sehr aufwendig und nur beschränkt verwendbar. Es ist auch bekannt, Karosserieteile von maximal 600 x 600 mm großen Abwicklungen mit Laserstrahlen zu schneiden (VDI-Z., Bd. 129 (1987) S. 17). Beim Verschweißen zweier Dünnbleche ist es bekannt, ein Außenblech um ein Innenblech zu falzen und die Falzverbindung mittels eines auf die Innenseite des umgefalzten Außenblechs gerichteten Laserstrahls so zu verschweißen, daß die nicht umgefalzte Seite des Außenblechs an der Schweißung nicht beteiligt ist (DE-OS 34 37 438) oder zwei umgefalzte Bleche entsprechend miteinander zu verschweißen (EP-Anmeldung, Veröffentlichungs-Nr. 200997). Aus der EP-OS 0 160 293 ist es bekannt, zum Teil nichtformstabile Blechteile von Kraftfahrzeugen in ihre Soll-Position zu bringen und teilweise überdeckend aufeinander zu legen und mit einem längs einer der Blechoberflächen geführten Laserstrahl zu verschweißen. Nach der EP-OS wird dabei in erster Linie das bekannte Widerstandspunktschweißen durch ein Laserpunktschweißen ersetzt, wobei die Blechteile mit der an einem Roboter angebrachten Andruckvorrichtung, ähnlich wie bei der am Roboter angebrachten Schweißzange, zusammengedrückt und mittels eines durch das Robotergestänge geleiteten Laserstrahls verschweißt werden. Diese Schweißvorrichtung vermeidet zwar den Verschleiß der Elektroden bei der bekannten Punktschweißung, ist im übrigen jedoch auf die Vielzahl von einzelnen Schweißpunkten mit dem zeitlichen Aufwand für das Spannen, Durchführung der Schweißung, Lösen und Weiterfahren angewiesen. Nach der Fig. 3 der EP-OS und der zugehörigen Beschreibung ist es auch möglich, kontinuierliche Schweißnähte dadurch zu erzeugen, daß man die Andruckglieder als Rollen ausbildet. Diese Rollenandrückvorrichtung ist auf räumlich günstige Anwendungsfälle beschränkt. Wegen des unvermeidlichen Platzbedarfs der Rollenandrückglieder ist es z.B. nicht möglich, von Blechwänden abgewinkelte, kurze Flansche zu verschweißen.

Ausgehend von diesem Stand der Technik wird die Aufgabe der Erfindung darin gesehen, ein Verfahren anzugeben, um bei Fahrzeug-Karosserieteilen u.dgl. Blechteilen das Laserschweißen mit geringem zeitlichen und maschinellen Aufwand durchführen zu können.

Diese Aufgabe wird bei einem Verfahren der eingangs genannten Gattung dadurch gelöst, daß zumindest das nichtformstabile Blechteil durch ein Meisterbett in seiner Soll-Form fixiert, mit dem anderen (oder den anderen) zu verschweißenden Blechteil(en) in gegenseitige Soll-Position gebracht, die Blechteile an diskreten Punkten zu einem formstabilen Karosserieteil geheftet werden und dann die Blechteile mit einer Lasernahtschweißung fest und dicht miteinander verbunden werden, wobei das eine oder mehrere der dem Laserkopf zugewandte(n) Blech(e) durchgeschmolzen und das dem Laserkopf abgewandte Blech zumindest angeschmolzen wird. Dabei ist es möglich, durch den auf die Oberfläche eines der Bleche gerichteten Laserstrahl beim Durchschmelzen des einen oder der mehreren laserkopfzugewandten Bleche und dem Anschmelzen des laserkopfabgewandten Bleches die Schweißverbindung herzustellen. Im Bedarfsfall kann selbstverständlich auch eine sämtliche Bleche durchsetzen Schweißnaht erzielt werden. Bei Blechpaketen aus mehr als zwei Blechen wird nur das dem Laserkopf entfernteste Blech als laserkopfabgewandtes Blech und alle übrigen Bleche als laserkopfzugewandte Bleche bezeichnet.

Trotz der unvermeidlichen Ungenauigkeiten (Toleranzen) bei der Fertigung und der Schwierigkeit, daß nichtformstabile Blechteile zurückfedern und dadurch nicht ohne weiteres dicht auf dem anderen, mit ihm zu verschweißenden Blech aufliegen, kann durch die Fixierung im Meisterbett und das Anheften die Nahtschweißverbindung mittels Laserstrahlen sehr schnell, zuverlässig, formgenau und belastungsfest bewerkstelligt werden. Auch Kantenbereiche und kompliziert geformte Kurven können dadurch, daß sie von Spanneinrichtungen frei zugänglich liegen, mit hoher Arbeitsgeschwindigkeit zuverlässig verschweißt werden. Dabei wirkt sich die große Flexibilität des Roboters hinsichtlich des Nachfahrens von Raumkurven positiv aus. Wegen der Möglichkeit des Arbeitens auch vom Karosserie-Innenraum her können Karosseriebleche, wie ein Dachblech, mit Seitenholmen schnell und einfach verschweißt werden. Bezüglich der Koordinate der Laserstrahlrichtung (z) besteht dabei im allgemeinen eine große zulässige Toleranz von rd. ± 1 mm. Bei der Veränderung des Laserkopfabstandes um diesen Betrag ändert sich zwar die Größe des Brennflecks auf der Blechoberfläche, bei den bei Robotern eingesetzten verhältnismäßig langen Brennweiten jedoch nur so geringfügig, daß das sichere Durch- bzw. Anschmelzen der miteinander zu verbindenden Bleche nicht beeinträchtigt ist.

Das erfindungsgemäße Verfahren erzielt in der Großserie, insbesondere von Kfz.-Karosserien, hohe Fertigungsgeschwindigkeiten und dementsprechend einen verringerten Bedarf hinsichtlich der Anzahl von Fertigungslinien.

Im einzelnen kann die Erfindung wie folgt vorteilhaft ausgestaltet sein.

Beim Zusammenschweißen von mehreren nichtformstabilen Blechteilen, wie z.B. einer Seitenwand mit einem Dach, wird jedes dieser Blechteile in einem Meisterbett in seiner Soll-Form fixiert, geheftet und geschweißt, wobei das zusammengeschweißte Blechteil aus zwei nichtformstabilen Teilen im allgemeinen Formstabilität erhält. Die Blechteile können dabei bis zum Fertigschweißen in den Meisterbetten eingespannt bleiben, wobei die Meisterbetten so ausgebildet werden, daß sie für das Schweißen durch den Roboter die zu verschweißenden Blechränder frei zugänglich lassen.

Bei Blechteilen, die schon durch das Heften genügend Formstabilität erhalten haben, so daß die zu verschweißenden Blechränder dicht aufeinanderliegen, empfiehlt die Erfindung, daß nach dem Zusammenheften der Blechteile das Meisterbett bzw. die Meisterbetten entfernt und das formstabile Bauteil auf einer Haltevorrichtung fixiert lasergeschweißt wird. Dabei ist selbst bei sehr komplizierten Fertigungsstücken die freie Zugänglichkeit zu den Schweißstellen besonders leicht zu verwirklichen.

Zur Ausführung des Verfahrens ist ein Roboter besonders geeignet, der den Laserstrahl mit einer Wiederholgenauigkeit hinsichtlich der Raumkoordinaten (x,y,z) führt, die etwa mit der Herstellungs- und der Positioniergenauigkeit der Karosserieteile übereinstimmt und der den Laserstrahl hinsichtlich seiner Richtung einstellt. Ein derartiger Roboter muß mindestens fünfachsig sein, z.B. mit drei Translationsachsen zum Anfahren jedes Raumpunktes (x,y,z) und zwei Rotationsachsen zur Ausrichtung des Laserstrahles hinsichtlich der Strahlrichtung.

Zweckmäßig arbeitet man mit einem Roboter, dessen Wiederholgenauigkeit im Bereich von ± 0,15 mm bis ± 0,25 mm liegt. Die Strahlrichtung sollte möglichst senkrecht auf die zu verschweißende Blechoberfläche einstellbar sein. Wenn infolge beschränkter Raumverhältnisse, z.B. im Karosserieinnenraum, eine zur Blechoberfläche schräge Strahlrichtung geboten ist, so ist das wenig kritisch und kann erforderlichenfalls durch Laserstrahlintensitätsänderung ausgeglichen werden.

An solchen Stellen, an denen trotz der Fixierung im Meisterbett und des Heftens noch linsenförmige Hohlräume zwischen den sich überdeckenden Teilen der Bleche vorhanden sind, kann das Entstehen einer fehlerfreien Schweißnaht dadurch gefördert werden, daß ein pulverförmiger metallischer Zusatzwerkstoff zwischen die Bleche geblasen wird.

Die geringeren Anforderungen des Verfahrens bezüglich des Abstandes des Laserkopfes von den zu verschweißenden Blechen kann dadurch gefördert werden, daß die ggf. gepulste Laserstrahlintensität und die Vorschubgeschwindigkeit so eingestellt werden, daß die beiden zu verbindenden Bleche nahtförmig durchgeschweißt werden. Wenn bei dieser Verfahrensweise Schwankungen des Laserkopfabstandes und eine dementsprechende Verschiebung des strahlenoptischen Fokus auftreten, so daß es durch Brennfleckvergrößerung auf der Blechoberfläche zur Erwärmung einer größeren Zone kommt, ist gleichwohl noch die einwandfreie Verbindung zwischen den Blechen gesichert.

Diese Verfahrensweise eignet sich besonders auch für das Verschweißen von mehreren, sich teilweise überlappenden Blechen, wie z.B. von drei Blechen und von Blechen, die an ihrem Randbereich flanschartig ausgebildet sind.

Eine exakte Einhaltung der Abstandskoordinate (z) des Laserkopfes von der Blechoberfläche kann dadurch erreicht werden, daß man den Abstand durch ein von dem Roboter auf dem Blech geführtes Tastorgan konstant hält. Die dadurch erzielte Einstellgenauigkeit des Laserkopfes kann ± 0,01 mm betragen.

Diese Maßnahme begünstigt die Arbeitsweise, zwei oder mehr aufeinanderliegende Blechteile so miteinander zu verschweißen, daß das für die Karosserieaußenseite vorgesehene Blech höchstens blaue Anlauffarben, aber keine wesentliche Strukturveränderung aufweist. Dazu empfiehlt sich noch die Maßnahme, daß von zwei oder mehr aufeinandergelegten Blechen die karosserieinneren Bleche von der Innenseite her mit solcher, vorzugsweise gepulster Intensität und Vorschubgeschwindigkeit mit Laserenergie beaufschlagt wird, daß die inneren Bleche (laserkopfzugewandten) vollständig durchschweißen und das an der Außenseite der Karosserie angeordnete (laserkopfabgewandte) Blech nur so weit aufschmilzt, daß an seiner Außenoberfläche nach einem Lackauftrag die Schweißnaht nicht erkennbar ist. Die einwandfreie Außenoberfläche wird regelmäßig ohne Nacharbeit erzielt. Bei den Verfahren nach dem Stand der Technik ist dies nur zuverlässig möglich bei mehreren aufeinanderliegenden Blechen, die falzartig ausgebildet sind, wobei nur die karosserieinneren Bleche am Schweißvorgang teilnehmen (DE-OS 34 37 483 und europäische Patentanmeldung, Veröffentlichungsnummer 200997). Nachfolgend wird bei Blechpaketen aus mehr als zwei Blechen nur das dem Laserkopf entfernteste Blech als laserkopfabgewandte Blech und alle übrigen Bleche als laserkopfzugewandte Bleche bezeichnet.

Zur Erhöhung der Steifigkeit und Torsionsfestigkeit von Außenhautteilen ist vorgesehen, daß die Außenblechteile mit inneren Versteifungsrahmen, insbesondere Deckel für den Kofferraum oder Motordeckel, derart verschweißt werden, daß das Blech des Versteifungsrahmens mit den Laserstrahlen beaufschlagt und durchgeschweißt wird und daß das spaltfrei anliegende Außenblech bezüglich seiner Dicke nur teilweise aufgeschmolzen wird. Bei den Außenhautblechen mit inneren Versteifungsrahmen ist nach dem Stand der Technik eine bezüglich der späteren Decklackierung problemlose Verbindung nur im gefalzten Randbereich möglich, dagegen nicht im übrigen Flächenbereich des Blechteils.

Wenn es auf ein verzugsfreies Verschweißen von Karosserieteilen besonders ankommt, empfiehlt sich die Arbeitsweise nach Anspruch 15. Sie ist auch vorteilhaft, wenn infolge des Herausnehmens der Blechteile aus dem Meisterbett nach dem Heften einem Verziehen der Blechteile beim Anfertigen der Schweißnaht entgegengewirkt werden soll.

Das Verfahren kann mit einem Robotersystem ausgeführt werden, bei dem ein 6-achsig beweglicher Roboter einen mit einer fokussierenden Optik und einer Gaskühlung ausgerüsteten Laserkopf trägt, in den ein Laserstrahl eingekoppelt ist. Dieser kann über ein aus Rohren und Kugelgelenken mit gekühlten Umlenkspiegeln bestehendes Laserstrahl-Führungssystem aus einem ortsfesten Laserstrahlerzeuger ausgekoppelt sein.

Im folgenden werden anhand der Zeichnung Ausführungsbeispiele der Erfindung erläutert. Es zeigen im einzelnen

Fig. 1 ein Gesamtsystem für das Laserstrahlschweißen in schematischer Darstellung, bei der eine zu schweißende PKW-Tür in einem Meisterbett fixiert ist,

Fig. 2 einen Schnitt durch einen Kastenprofil-Längsträger einer Karosserie in perspektivischer Sicht mit Laserschweißnähten an den Flanschen,

Fig. 3 einen Federtopf mit angeschweißter Seitenwand einer PKW-Karosserie,

Fig. 4 einen Kofferraumdeckel mit abgesetzt dargestelltem Versteifungsrahmen in Ansicht von unten,

Fig. 5 einen Querschnitt längs der Linie V-V, bei dem das Kofferraumaußenblech mit dem Versteifungsrahmen laserverschweißt ist,

Fig. 6 vergrößert die Einzelheit A aus Fig. 5,

Fig. 7 vergrößert die Einzelheit B aus Fig. 5,

Fig. 8 einen robotergeführten Laserkopf mit einem Tastorgan zu zwei Blechen,

Fig. 9 einen Schräglenker in Draufsicht,

Fig. 10 einen Schnitt längs der Linie XII-XII in Fig. 9.

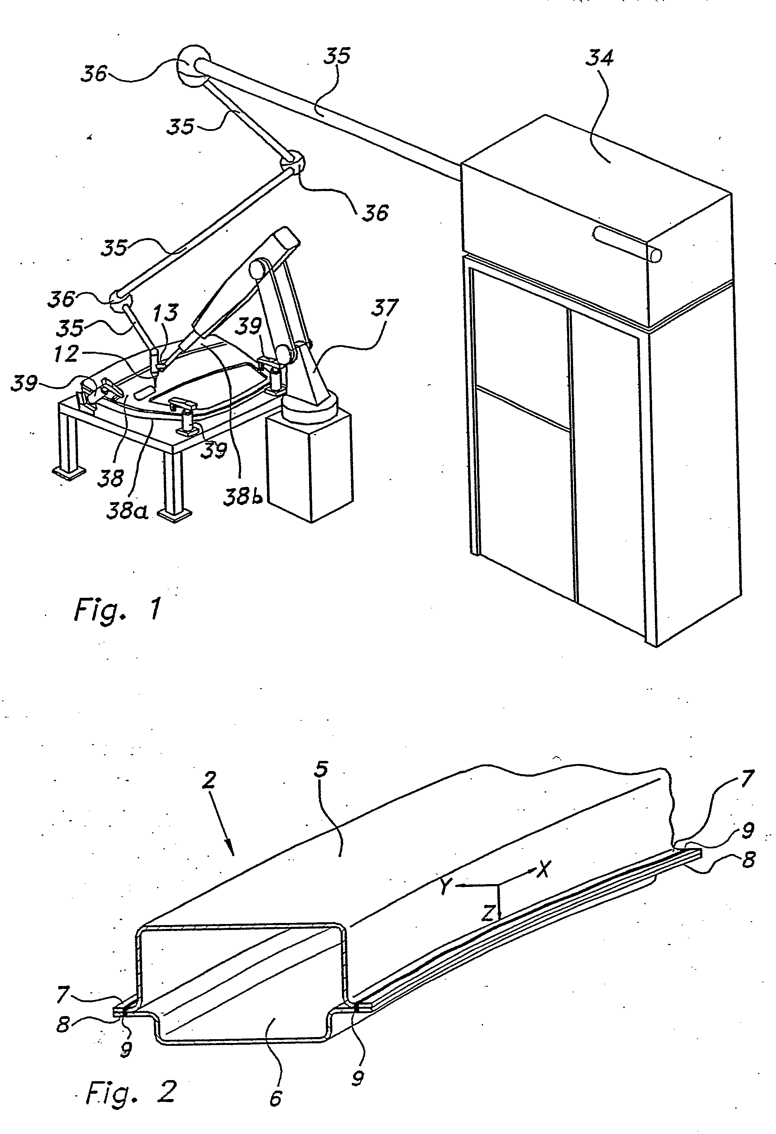

Nach Fig. 1 ist ein nichtformstabiles Blechteil, hier ein Fahrzeugtüraußenteil 38 durch ein Meisterbett 38a in seiner Soll-Form fixiert und mit dem anderen zu verschweißenden Blechteil, der Türinnenwand 38b, in die gegenseitige Soll-Position gebracht worden. Nach dem Heften der Blechteile an diskreten Punkten werden die Blechteile in der in Fig. 1 dargestellten Weise mit einer Lasernahtschweißung fest und dicht miteinander verbunden, wobei nur das Innenblech 38b durchgeschmolzen und das äußere Türschalenblech 38 nur angeschmolzen wird, so daß die Außenhaut unbeschädigt und lackierfähig bleibt.

Die in Fig, 1 schematisch dargestellte Schweißvorrichtung hat einen Laserstrahlerzeuger 34 mit Resonator (Leistungsverstärker), aus dem der Laserstrahl über mehrere Rohre 35 mit zwischengeschalteten Gelenken 36, deren gekühlte Umlenkspiegel nicht dargestellt sind, zum Laserkopf 12 geleitet sind. Der Laserkopf 12 ist am Tragarm 13 eines Roboters 37 geführt. Die Klammern 39 halten die Außenschale der Fahrzeugtür 38 in der fixierten Soll-Form fest und lassen trotzdem die Außenkanten der zu verschweißenden Blechteile 38a und 38b im wesentlichen frei zugänglich für den längs der Schweißnaht zu führenden Laserkopf 12. Wenn eine vollkommen geschlossene Schweißnaht erwünscht ist, kann nach dem Lösen der Klammern der Klammerbereich in unveränderter Arbeitsposition mit dem Laser nachgeschweißt werden.

Anhand der folgenden Figuren werden Beispiele für das Verschweißen der zum Teil nicht formstabilen Blechteile erläutert.

Gemäß Fig. 2 wird das Kastenprofil eines Längsträgers 2 gebildet aus dem oberen Blech 5 und dem unteren Blech 6; die Längsseiten beider Bleche weisen abgekantete Flanschen 7,8 auf. Die zu verbindenden Blechteile 5,6 sind mit ihren Flanschen 7,8 einander überdeckend aufeinandergelegt und mit je einem Meisterbett in ihrer Soll-Position und in ihrer Soll-Form fixiert worden. Die Meisterbetten sind in der Zeichnung nicht dargestellt. Der Roboter (Fig. 1) führt den Laserkopf 12 längs der Oberfläche des Flansches 7 mit einer derartigen Laserenergiedichte, so daß die beiden Flansche 7,8 nahtförmig durchgeschweißt werden. Die Herstellungsgenauigkeit und die Positioniergenauigkeit der Bleche 5,6 (einschl. ihrer Flanschen 7,8) beträgt etwa ± 0,2 mm. Die Wiederholgenauigkeit handelsüblicher Roboter hat praktisch den gleichen Wert und liegt meist im Bereich von ± 0,15 mm bis 0,25 mm. Diese Übereinstimmung der beiden Genauigkeiten ermöglicht es, zusammen mit der Fixierung der Blechteile mit Meisterbetten in ihrer Soll-Form, wobei die Ränder spaltfrei aufeinander liegen, mit den Mitteln der Laserschweißtechnik Karosserieteile (Bleche) miteinander zu verbinden und zwar mit einer Fertigungsgeschwindigkeit, die etwa das zwei- bis dreifache oder mehr beträgt gegenüber dem üblichen Punktschweißen. Bei der Karosserieherstellung in der Großserie verringert sich daher die für eine bestimmte Produktion erforderliche Anzahl von Fertigungslinien. Hinzu kommt, daß beim Laserschweißen Roboter mit bedeutend geringerer Nutzlast verwendet werden können im Vergleich zu den beim Punktschweißen einzusetzenden Robotern. Beim Laserschweißen kann der Überdeckungsbereich der zu verbindenden Bleche dadurch, daß die Blechteile durch die Meisterbetten in der Soll-Form fixiert liegen, die Flansche frei zugänglich sind und über sie nicht der Andruck aufgebracht werden muß, bedeutend geringer gewählt werden. Z.B. ist bei den Flanschen 7,8 eine Flanschbreite von nur etwa 5 mm erforderlich, während die Flanschbreite beim Punktschweißen etwa 16 mm beträgt.

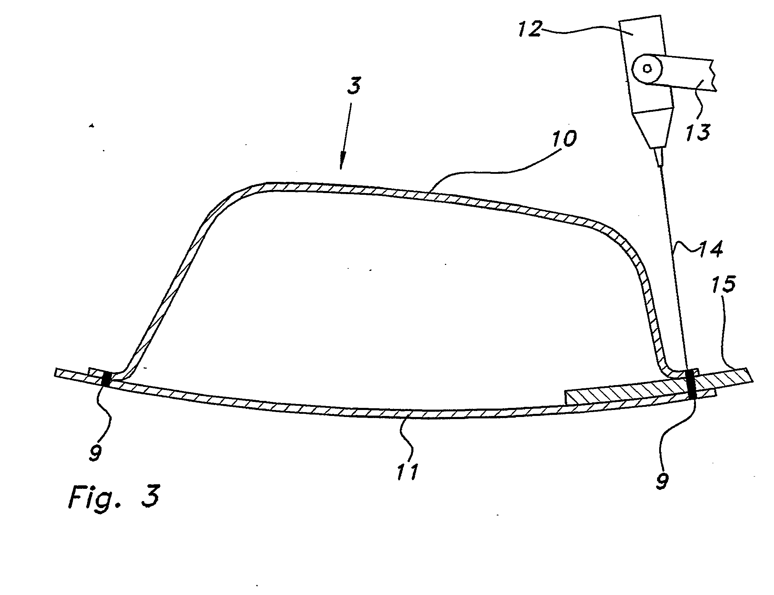

Fig. 3 zeigt einen Federtopf 3 aus einem abgeflacht kalottenähnlichen oberen Blechteil 10 und einem Seitenwand-Blechteil 11. Die Laserstrahleinrichtung ist bezüglich einer Einzelheit dargestellt mit dem Laserkopf 12, der von dem Roboterarm 13 geführt ist, und mit einem Laserstrahl 14. Im Bereich des linksseitigen Randes sind die beiden Blechteile 10,11 mit einer solchen Laserstrahlintensität und Vorschubgeschwindigkeit des Laserstrahls beaufschlagt worden, so daß eine durchgehende Schweißnaht 9 erzielt ist. Im rechten Randbereich sind zwischen die Blechteile 10,11 noch ein weiteres Blechteil 15 eingefügt und die drei Bleche des Blechpaketes 10,11,15 mittels einer die Dicke des ganzen Blechpakets durchsetzenden Schweißnaht 9 miteinander verbunden. Beim vollständigen Durchschweißen zweier Bleche und mehrlagiger Blechpakete hat sich gezeigt, daß die Einstellgenauigkeit des Laserkopfes in Richtung (z) des Laserstrahls 14 nur etwa ± 1 mm zu betragen braucht, was mit den üblichen Robotern ebenfalls ohne weiteres zu erreichen ist.

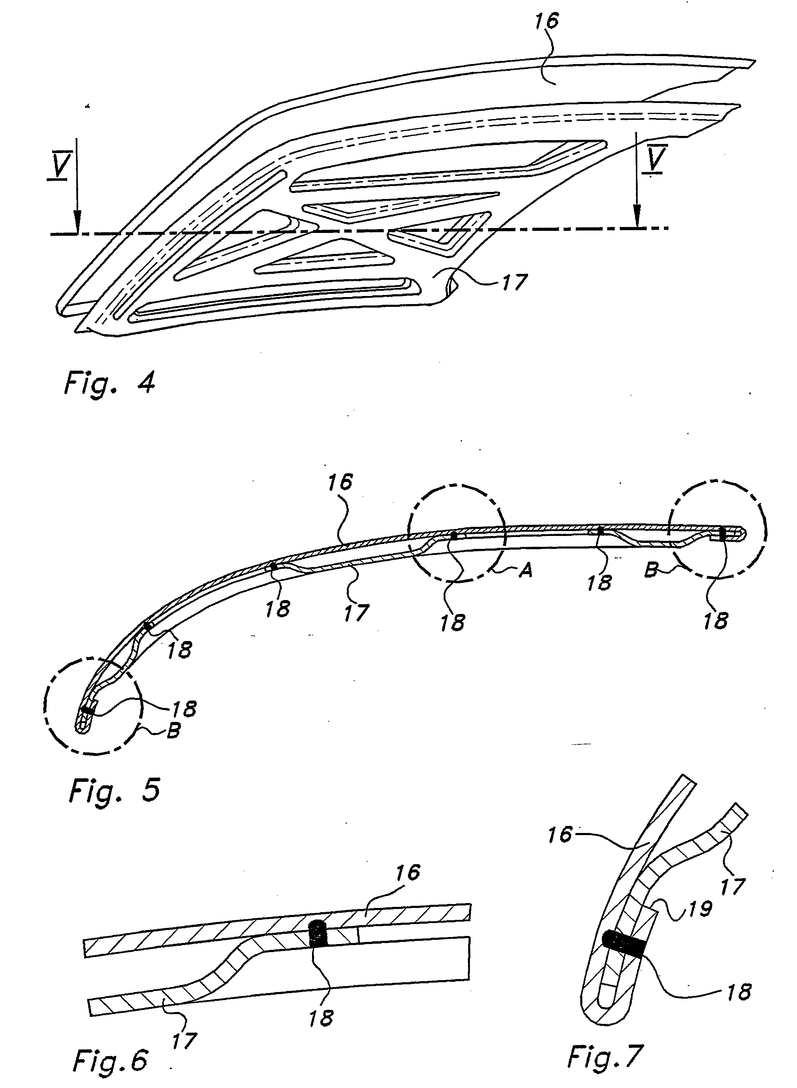

In Fig. 4 ist ein Karosserieaußenhaut-Deckel, z.B. Kofferraumdeckel 16 von seinem Versteifungsrahmen 17 zur Verdeutlichung abgesetzt (beabstandet), gezeigt.

Aus dem Schnitt nach Fig. 5 und den Einzelheiten gemäß den Figuren 6 und 7 ist ersichtlich: Im Randbereich besteht die Verbindung zwischen Kofferraumdeckel 16 und Versteifungsrahmen 17 aus einem Falzen mit einer derartigen Schweißnaht 18, daß die beiden laserkopfzugewandten Teile durchgeschweißt sind, während der laserkopfabgewandte Kofferraumdeckel 16 (Karosserieaußenhautteil) nur mit einem Teil seiner Dicke von der Schweißnaht erfaßt ist. Zusätzlich sind im übrigen Flächenbereich des Deckels 16 Berührungsstellen (spaltfreie Überdeckungsflächen) zwischen Kofferraumdeckel 16 und Versteifungsrahmen 17 geschaffen, die ebenfalls mittels einer in den Deckel 16 nur teilweise eingedrungenen Schweißnaht 18 miteinander verbunden sind. Das Fixieren des Kofferraumdeckels in der Soll-Form im in der Zeichnung nicht dargestellten Meisterbett ermöglicht das Andrücken des einer Fixierung nicht bedürftigen stabilen Versteifungsrahmens 17 so, daß er an den Schweißstellen 18 am Kofferraumdeckel 16 dicht anliegt.

Das ergibt einen sehr formstabilen, insbesondere torsionssteifen Karosseriedeckel. Bei üblicher Arbeitsweise hat im Flächenbereich des Versteifungsrahmens 17 auch nach dem Blechverbinden durch Falzen der Rahmen 17 einen Abstand zum Deckel 16, der mittels elastischer und/oder klebender Werkstoffe ausgefüllt ist.

Blechverbindungen durch Falzen werden auch bei Karosserietüren und dergleichen angewandt. Hier kann die vorstehend erörterte Arbeitsweise, insbesondere nach Fig. 7, ebenfalls angewandt werden. Bisher wurden derartige Falzverbindungen dadurch verstärkt, daß entweder an der Stirnseite 19 des Falzes eine Kehlnaht gelegt wurde oder lediglich die karosserieinnenseitigen Blechteile mit einer Schweißnaht verbunden werden, während das Außenhautblech an der Schweißnaht nicht teilnimmt.

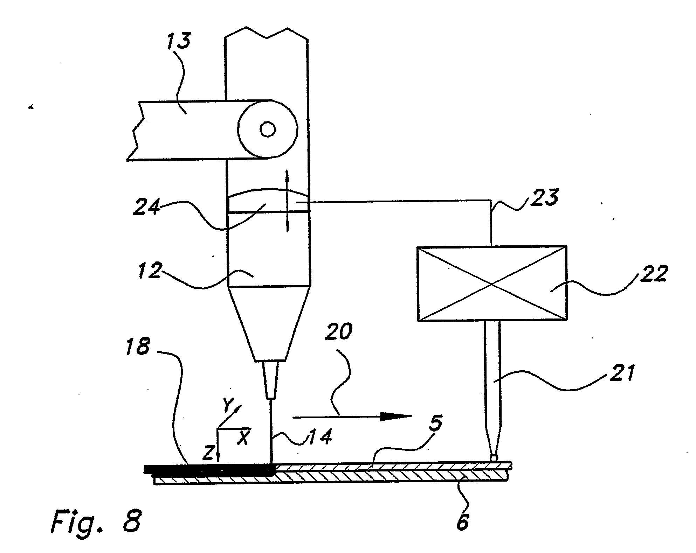

Beim Laserschweißen wird in der Praxis die an der Schweißstelle jeweils erforderliche Energiedichte insbesondere durch die gewählte Vorschubgeschwindigkeit und durch einen meist gepulsten Laserstrahl (Pulsfrequenz ca. 100 Hz bis 1 kHz) erzielt. Zum Laserstrahlschweißen, bei dem erfindungsgemäß Karosseriebleche zwei- oder mehrlagig miteinander zu verschweißen sind derart, daß das laserkopfabgewandte Blech bezüglich seiner Dicke nur teilweise von der Schweißnaht erfaßt wird, empfiehlt sich eine Laserkopfabstandssteuerung gemäß Fig. 8. Dabei wird ein der Vorschubrichtung 20 des Laserstrahls 14 voreilendes Tastorgan 21 verwendet, das in vereinfachter Darstellung über ein Stellglied 22 und eine mechanische Verbindung 23 die Sammellinse 24 des Laserkopfs 12 oder - was nicht dargestellt ist, den Laserkopf 12 mit einer feststehenden Linse 24 - verstellt, so daß die Brennfleckgröße an der Blechoberfläche durch eine Abstandssteuerung mit einer Genauigkeit von ± 0,01 mm konstant gehalten wird und der optische Laserstrahlfokus in der Blechebene liegt.

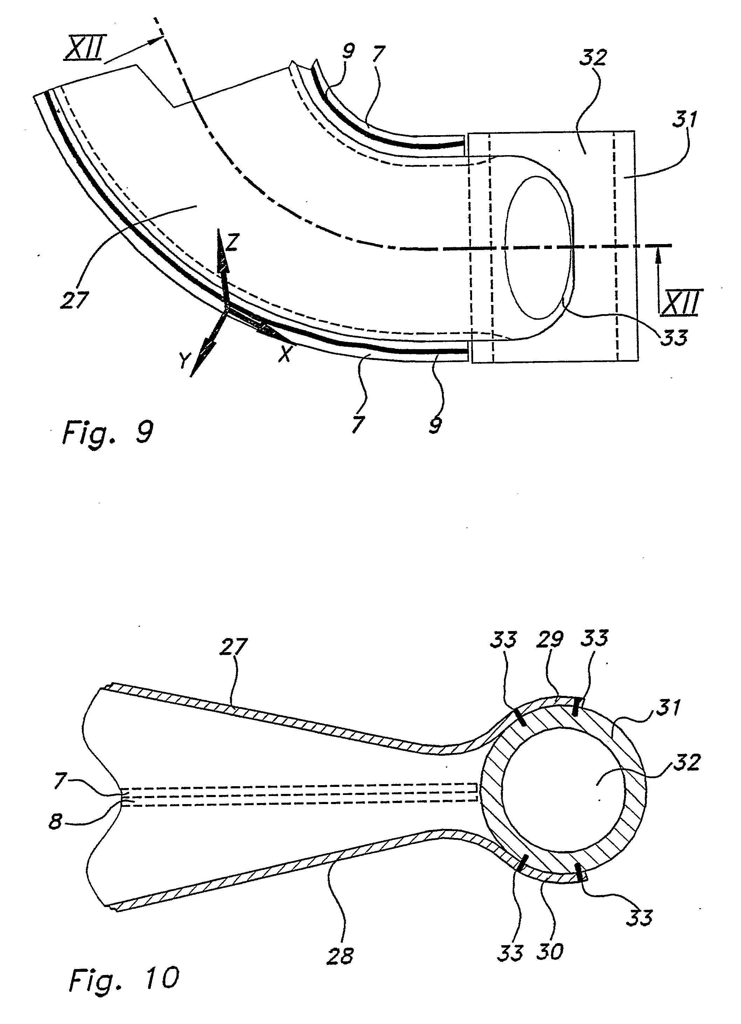

Der Schräglenker nach den Figuren 9 und 10 besteht aus einer Oberschale 27 und einer Unterschale 28 mit Flanschen 7,8, die in ihrer Soll-Position einander überdeckend aufeinander gelegt, fixiert und fest gegeneinander gedrückt worden sind und die in vorbeschriebener Weise mittels des Roboters (Fig 1) mit Laserkopf 12 mittels einer Schweißnaht an den zusammengehörenden Flanschen 7,8 fest verbunden sind. Die beiden Schalen 27,28 umfassen in ihren Endbereichen 29,30 eine Buchse 31 mit Bohrung 32. Zum Laserverschweißen der beiden Schalen 27,28 mit der Buchse 31 wird der Laserkopf 12 auf einer geschlossenen Raumkurve geführt, die sich in der Draufsicht (Fig. 9) annähernd elliptisch darstellt, so daß sich eine Schweißnaht 33 ergibt. Die Schweißung erfolgt besonders dann verzugsfrei, wenn der Laserstrahl derart getaktet wird, daß die Schweißnaht 33 zunächst nur auf Teilstrecken der Raumkurve gelegt und die Schweißnahtlücken dann durch zwei oder mehrmaliges Abfahren der Raumkurve zunehmend geschlossen werden.

Bei üblicher Konstruktions- und Arbeitsweise nach dem Stand der Technik sind die Schalen 27,28 weniger eingezogen ausgebildet, so daß sie in ihren Endbereichen 29,30 eine kleine Berührungsfläche mit der Buchse 31 aufweisen und eine Kehlnahtschweißung an den Stirnflächen der Endbereiche 29,30 erfolgt. Dabei ergibt sich ein erheblicher Verzug, der ein Nachbearbeiten der Buchse 31 (Bohrung 32) erforderlich macht.

## Ansprüche

1. Verfahren zur Herstellung von Karosserien und Karosserieteilen von Kraftfahrzeugen und sonstigen Fahrzeugen durch Verschweißen zum Teil nicht formstabiler Blechteile, bei dem die zu verbindenden Blechteile in ihrer Soll-Position einander teilweise überdeckend aufeinandergelegt werden, zumindest im Schweißbereich zum direkten Aufeinanderliegen gebracht und mit einem längs einer Oberfläche der Blechteile geführten Laserstrahl hoher Energie verschweißt werden, dadurch gekennzeichnet, daß zumindest das nicht formstabile Blechteil durch ein Meisterbett in seiner Soll-Form fixiert, mit dem anderen (oder den anderen) zu verschweißenden Blechteil(en) in gegenseitige Soll-Position gebracht, die Blechteile an diskreten Punkten zu einem formstabilen Karosserieteil geheftet werden und dann die Blechteile mit einer Lasernahtschweißung fest und dicht miteinander verbunden werden, wobei das eine oder mehrere der dem Laserkopf zugewandte(n) Blech(e) durchgeschmolzen und das dem Laserkopf abgewandte Blech zumindest angeschmolzen wird.

2. Verfahren nach Anspruch 1, dadurch gekennzeichnet, daß bei einem Karosserieteil aus mehreren nicht formstabilen Blechteilen, jedes dieser Blechteile in einem Meisterbett in seiner Soll-Form fixiert wird.

3. Verfahren nach Anspruch 1 oder 2, dadurch gekennzeichnet, daß nach dem Zusammenheften der Blechteile das Meisterbett bzw. die Meisterbetten entfernt und das formstabile Bauteil auf einer Haltevorrichtung fixiert lasergeschweißt wird.

4. Verfahren nach einem der obigen Ansprüche, dadurch gekennzeichnet, daß der verwendete Roboter geeignet ist, den Laserstrahl mit einer Wiederholgenauigkeit hinsichtlich der Raumkoordinaten (x,y,z) zu führen, die etwa mit der Herstellungs- und Positioniergenauigkeit der Karosserieteile übereinstimmt und den Laserstrahl hinsichtlich seiner Richtung einzustellen.

5. Verfahren nach Anspruch 4, dadurch gekennzeichnet, daß die Richtung (z) des Laserstrahls senkrecht auf die Oberfläche der zu verschweißenden Bleche gerichtet wird.

6. Verfahren nach Anspruch 4 oder 5, dadurch gekennzeichnet, daß die Wiederholgenauigkeit des Roboters ± 0,15 bis 0,25 mm beträgt.

7. Verfahren nach einem der obigen Ansprüche, dadurch gekennzeichnet, daß an solchen Stellen der aneinandergedrückten Bleche, an denen noch Hohlräume zwischen den Blechen vorhanden sind, ein pulverförmiger metallischer Zusatzwerkstoff zwischen die Bleche geblasen wird.

8. Verfahren nach einem der obigen Ansprüche, dadurch gekennzeichnet, daß die ggf. gepulste Laserstrahlintensität und die Vorschubgeschwindigkeit so eingestellt werden, daß die zu verbindenden sich überdeckenden Bleche nahtförmig durchgeschweißt werden.

9. Verfahren nach Anspruch 8, dadurch gekennzeichnet, daß drei sich meist mit ihrem Randbereich überdeckende Bleche nahtförmig durchgeschweißt werden.

10. Verfahren nach Anspruch 8, dadurch gekennzeichnet, daß zwei Bleche in ihrem Randbereich flanschartig ausgebildet werden und die Flansche nahtförmig durchgeschweißt werden.

11. Verfahren nach einem der obigen Ansprüche, dadurch gekennzeichnet, daß der Abstand (z-Koordinate) des Laserkopfes von der Blechoberfläche mittels eines auf dem Blech geführten Tastorganes konstant gehalten wird.

12. Verfahren nach Anspruch 11, dadurch gekennzeichnet, daß die durch das Tastorgan bedingte Einstellgenauigkeit des Laserkopfes ± 0,01 mm beträgt.

13. Verfahren nach einem der obengenannten Ansprüche, insbesondere _ nach Anspruch 11 oder 12, dadurch gekennzeichnet, daß von zwei oder mehr aufeinandergelegten Blechen die karosserieinneren (laserkopfzugewandten) Bleche von der Innenseite her mit solcher, vorzugsweise gepulster Intensität und Vorschubgeschwindigkeit mit Laserenergie beaufschlagt werden, daß die karosserieinneren Bleche vollständig durchschweißen und das an der Außenseite der Karosserie angeordnete (laserkopfabgewandte) Blech nur so weit aufschmilzt, daß an seiner Außenoberfläche nach einem Lackauftrag die Schweißnaht nicht erkennbar ist.

14. Verfahren nach Anspruch 13, dadurch gekennzeichnet, daß Außenblechteile mit inneren Versteifungsrahmen, insbesondere Deckel für den Kofferraum oder Motordeckel, so verschweißt werden, daß das Blech des Versteifungsrahmens mit den Laserstrahlen beaufschlagt und durchgeschweißt wird und daß das gepreßt anliegende Außenblech bezüglich seiner Dicke nur teilweise aufgeschmolzen wird.

15. Verfahren nach einem oder mehreren der Ansprüche 1 bis 14, dadurch gekennzeichnet, daß zur Erzeugung einer Schweißnaht zwischen gegeneinandergedrückten Blechen längs einer offenen oder geschlossenen Raumkurve ein oberhalb des laserkopfzugewandten Bleches geführter Laserkopf die Raumkurve mehrmals durchläuft und dabei der Laserstrahl derart getaktet wird, daß die Schweißnaht beim ersten Durchlauf zunächst nur an mehreren Raumkurvenabschnitten erzeugt wird und bei dem mindestens einen weiteren Durchlauf die Schweißnahtlücken der Bleche ebenfalls durchgeschweißt werden, so daß eine über die gesamte Raumkurvenstrecke durchgehende, zusammenhängende Schweißnaht ausgebildet wird.

Fig. 1

Fig. 2

Fig. 3

Fig. 4

Fig. 5

Fig.6

Fig.7

Fig. 8

Fig. 9

Fig. 10